# EUROPEAN PATENT APPLICATION

(11) **EP 2 194 707 A1**
(43) Date of publication of application: **09.06.2010**
(21) Application number: 08170420.7
(22) Date of filing: 02.12.2008
(51) Int. Cl.: H04N 5/445

(54) **Method for displaying information window and display apparatus thereof**

(71) Applicant: Samsung Electronics Co., Ltd., Suwon-si, Gyeonggi-do 442-742 (KR)
(72) Inventor: Lee, Dong-heon, Seoul (KR); Kim, Joon-hwan, Gineung-gu Gyeonggi-do Yongin-si (KR); Lee, Hyeon-ji, Gyeonggi-do Suwon-si (KR)
(74) Representative: Waddington, Richard

(57) **Abstract**

A method for displaying an information window (101,102) and a display apparatus thereof are provided. A display apparatus includes a network interface which receives time-varying information from an external source, an On Screen Display (OSD) generating unit which generates an information window (101,102) to show the information, a signal processing unit which processes an image signal to be ready to display, a display unit which displays the processed image (103) with the generated information window (101,102) on a screen, and a control unit which controls the OSD generating unit, the signal processing unit, and the display unit to display the processed image and the generated information window (101,102) together.

## Description

### BACKGROUND OF THE INVENTION

### 1. Field of the Invention

Methods and apparatuses consistent with the present invention relate to displaying an information window, and more particularly to a method for displaying an information window and picture together and a display apparatus thereof.

### 2. Description of the Prior Art

Many display apparatuses provide an electronic photo album mode in which a picture or pictures such as family photos or scenery photos are displayed as a still image or sequentially. And many display apparatuses provide a sleep mode in which a display apparatus displays a simple image when a display apparatus is not used. In this photo album mode or sleep mode, the display apparatus does not display time-varying information but a mere picture or a mere image.

### SUMMARY OF THE INVENTION

An aspect of the present invention is to provide display apparatuses which display a picture and an information window together and display methods thereof. Another aspect of the present invention is to provide a method for setting a design and a display condition of an information window.

According to the present invention there is provided an apparatus and method as set forth in the appended claims. Other features of the invention will be apparent from the dependent claims, and the description which follows.

According to an aspect of the invention, there is provided a method for displaying an information window which comprises (a) processing an image signal to be ready to display, (b) generating an information window to show time-varying information received from an external source, and (c) displaying the processed image with the generated information window on a screen.

The method may further comprise (d) detecting a position where there is no processed image in the screen or less color change in the processed image and the generated information window is displayed.

The method may further comprise repeating (a), (c), and (d) if the image signal is changed or a position where the processed image is displayed is changed.

The method may further change a position where the generated information window is displayed after a predetermined time passes.

The information window may have different shape depending on information type. The information may use a Really Simple Syndication (RSS) format.

According to another aspect of the invention, there is provided a method for displaying an information window which comprises (a) processing an image signal to be ready to display if a mode is a photo album mode or a sleep mode, (b) generating an information window to show time-varying information received from an external source if the mode is the photo album mode or the sleep mode, and (c) displaying the processed image with the generated information window on a screen.

The method may further comprise (d) detecting a position where there is no processed image in the screen or less color change in the processed image and the generated information window is displayed.

The method may further comprise repeating (a), (c), and (d) if the image signal is changed or a position where the processed image is displayed is changed.

The method may further change a position where the generated information window is displayed after a predetermined time passes.

The information window may have different shape depending on information type. The information may use a Really Simple Syndication (RSS) format.

According to another aspect of the invention, there is provided a method for setting an information window which comprises selecting an information type, selecting a design of an information window for the selected information type, and selecting at least one of display options for the information window.

The display options may be a size of the information window, a display position of the information window, a transparency of the information window, and a display time of the information window.

According to another aspect of the invention, there is provided a display apparatus which comprises a network interface which receives time-varying information from an external source, an On Screen Display (OSD) generating unit which generates an information window to show the information, a signal processing unit which processes an image signal to be ready to display, a display unit which displays the processed image with the generated information window on a screen, and a control unit which controls the OSD generating unit, the signal processing unit, and the display unit for the processed image and the generated information window are displayed together.

The display apparatus may further comprise a user input unit which is used to select an option for displaying or generating the information window.

The control unit may detect a position where there is no processed image in the screen or less color change in the processed image and the generated information window is displayed.

The control unit may change a position where the generated information window is displayed after a predetermined time passes.

The information window may have different shape depending on information type.

The information may use a Really Simple Syndication (RSS) format.

### BRIFF DESCRIPTION OF THE DRAWINGS

The above and other aspect and features of the present invention will be apparent from the following detailed description taken in conjunction with the accompanying drawings, in which:

FIG. 1 is a block diagram of a display apparatus according to an exemplary embodiment of the present invention;

FIG. 2A and 2B illustrate screens displaying pictures and information windows according to an exemplary embodiment of the present invention;

FIG. 3 illustrates a menu for setting an environment according to an exemplary embodiment of the present invention, especially a menu for setting information type;

FIG. 4 illustrates a menu for setting an environment according to an exemplary embodiment of the present invention, especially a menu for setting GUIs;

FIG. 5 illustrates a menu for setting an environment according to an exemplary embodiment of the present invention, especially a menu for setting display conditions;

FIG. 6 is a flow chart of operations of a display apparatus according to an exemplary embodiment of the present invention;

FIG. 7 is a flow chart of operations of a display apparatus according to an exemplary embodiment of the present invention, especially operations of a display apparatus when a picture to be displayed changes over time; and

FIG. 8 is a flow chart of operations of setting an information window according to an exemplary embodiment of the present invention.

### DETAILED DESCRIPTION OF EXEMPLARY EMBODIMENTS OF THE INVENTION

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are merely specific details provided to assist those of ordinary skill in the art in a comprehensive understanding of the invention, and the present invention is only defined within the scope of the appended claims.

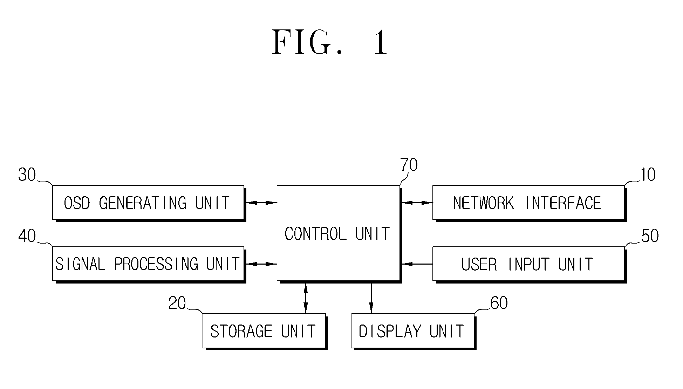

FIG. 1 is a block diagram of a display apparatus according to an exemplary embodiment of the present invention.

The display apparatus according to an embodiment of the present invention includes a network interface 10, a storage unit 20, an On Screen Display (OSD) generating unit 30, a signal processing unit 40, a user input unit 50, a display unit 60, and a control unit 70. The display apparatus according to an embodiment of the present invention may be implemented as a TV, a monitor, a mobile display device, an electronic photo album, etc.

The network interface 10 receives time-varying information such as weather, news, stock market, time, popular moving images, popular key words, advertisement, etc., from various kinds of external sources. The network interface 10 may receive the information periodically. The network interface 10 sends the received information to the storage unit 20. The information may use a Really Simple Syndication (RSS) format which is a kind of contents representation type used in internet sites. The RSS format is designed for a receiver to display conveniently.

The storage unit 20 stores the information received from the external sources and updates the stored information to the latest information. The storage unit 20 may send the stored information to the OSD generating unit 30. The storage unit 20 stores picture signals or image signals to be displayed in a photo album mode or in a sleep mode of the display apparatus. The storage unit 20 sends the picture signals or image signals to the signal processing unit 40. The storage unit 20 stores Graphic User Interfaces (GUI) for an information window which is displayed in a part of a screen of the display apparatus and displays the information. The storage unit 20 sends the GUIs to the display unit 60.

The OSD generating unit 30 generates an information window including the GUIs. A user may select and set GUIs the user wants. The OSD generating unit 30 sends the generated information window to the display unit 60 if there is a request from the control unit 70. The OSD generating unit 30 may generate an information window corresponding to the received information. For example, if the received information is current time information and a user select an analogue clock GUI, the OSD generating unit 30 generates the analogue clock GUI which shows the current time corresponding to the current time information. The information window may present the received information as a text style. The OSD generating unit 30 sends the generated information window to the display unit 60.

The signal processing unit 40 processes the picture signals or the image signals and recovers a picture or an image to be displayed. For examples, the picture or the image may be a family picture, scenery, a logo, cartoons, graphics, etc., for the photo album mode or the sleep mode. The signal processing unit 40 sends the recovered picture or image to the display unit 60.

A user may select whether to display the information window, information type to be displayed in the information window, the GUIs for the information window, size of the information window, display position of the information window, transparency of the information window, display time of the information window, pictures or images to be displayed in the photo album mode or the sleep mode, etc., using the user input unit 50. A remote controller, a keyboard, a keypad, touch screen type graphic keys are examples of the user input unit 50.

The display unit 60 may display the pictures or the images of the photo album mode or the sleep mode with the information window. The display unit 60 displays a setting menu for providing setting options for the information window and pictures if a user select the menu mode. A Liquid Crystal Display (LCD), a Plasma Display Panel (PDP), an Organic Light Emitting Diode (OLED), and a Cathode Ray Tube (CRT) are examples of the display unit 60.

The control unit 70 controls the signal processing unit 40 and the OSD generating unit 30 to display a picture or an image with a selected information window if a user set the picture or the image to be displayed with the information window in advance. The control unit 70 controls the OSD generating unit 30 to display the selected information window for a selected time, at a selected size, at a selected position, with a selected transparency. The control unit 70 may search for a position where there is no image or where there is little or no color variation in the screen and locate the information window to the found position for preventing overlapped display between the picture and the information window. The control unit 70 controls update of the stored information.

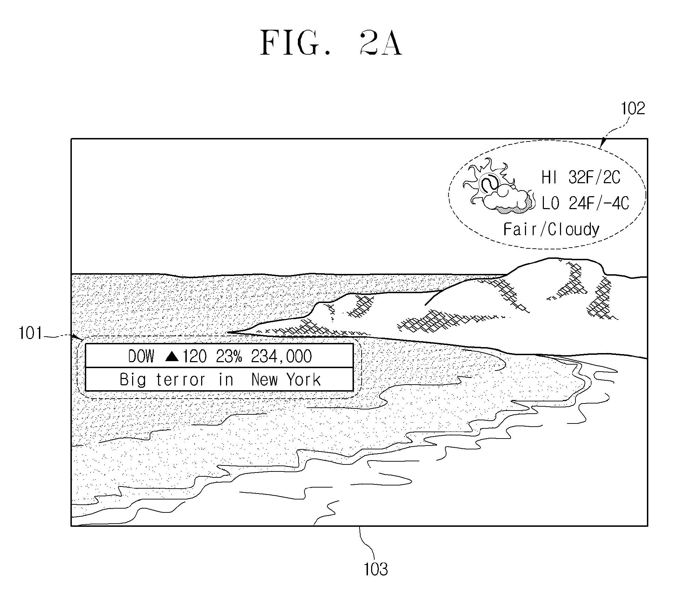

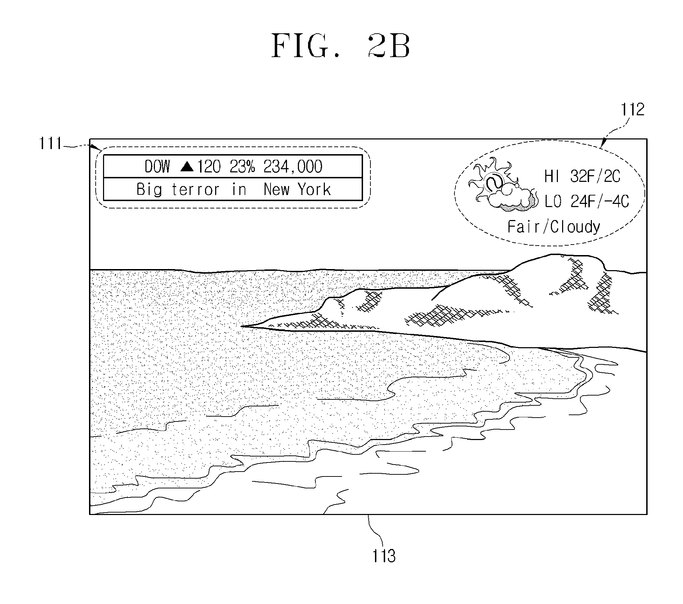

FIG. 2A and 2B illustrates screens displaying pictures and information windows according to an exemplary embodiment of the present invention. Referring to FIG. 2A, first information window 101 is a window for stock market and news with a black background and second information window 102 is a window for weather with a icon related the weather. The first information window 101 overlaps with a picture 103. Referring to FIG. 2B, first information window 111 corresponds to the first information window 101, but position of the first information window 111 is different from the position of the first information window 101. The first information window 101 is an example of information window of fixed position. The position of the first information window 101 doesn't change depending on the picture 103. Referring to FIG. 2B, the first information window 111 is an example of information window of variable position. The position of the first information window 111 changes depending on the content of the picture 113. A user may select whether the position is fixed or variable in advance. If a user selects the variable position option, the first information window 111 is displayed at a position where there is no or less overlap with a picture 113, or where there is less change in color of the picture 113 than at other areas of the picture 113. The amount of overlap and/or the change in color of the picture may be determined through conventional methods. In another exemplary embodiment, the first information window 111 is displayed at a position where there is no partial overlap with a content in the picture 113. If the display mode of pictures is a slide mode in which many pictures are displayed sequentially with a predetermined time interval or the picture is a moving image, the display position of the information window changes with time.

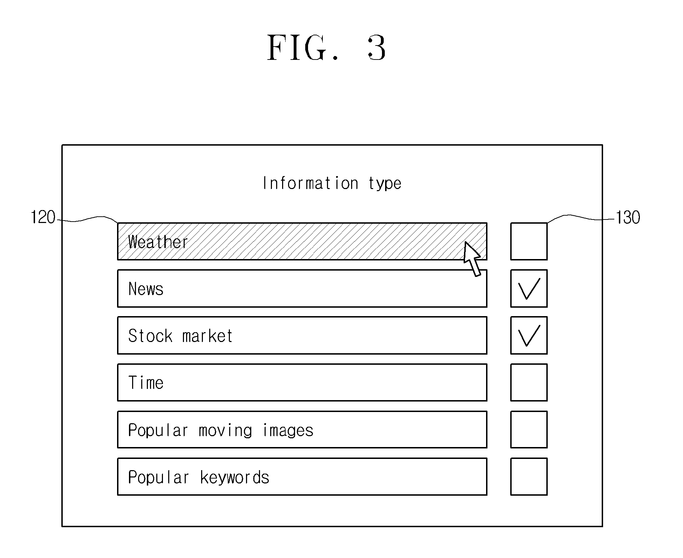

FIG. 3 illustrates a menu for setting an environment according to an exemplary embodiment of the present invention, especially a menu for setting information type.

Referring to FIG. 3, the menu for setting information type may display a list 120 of all the information types which the display apparatus is able to display. A user may select an item from the list 120 using the user input unit 50. The item may be chosen by touch screen method or moving an arrow or highlight on the screen using direction keys in the user input unit 50. The menu for setting information type may display check boxes 130 for indicating which items are already selected. Referring to FIG. 3, the 'news' and 'stock market' items are already selected. If a user selects an item, then the menu may be changed to next menu.

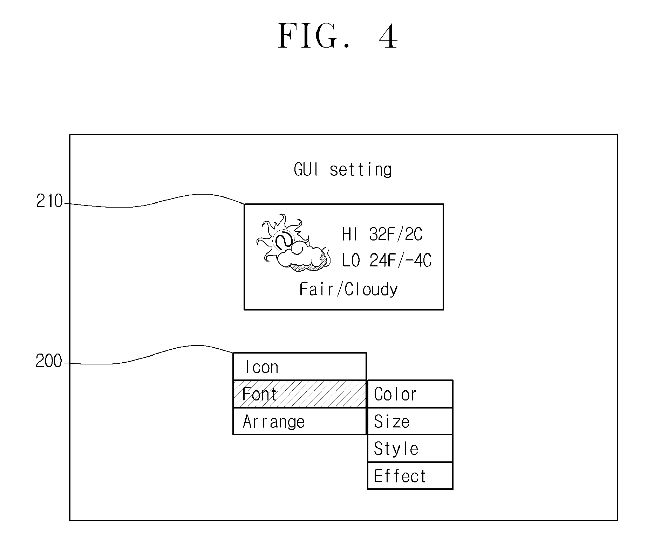

FIG. 4 illustrates a menu for setting an environment according to an exemplary embodiment of the present invention, especially a menu for setting GUIs.

Referring to FIG. 4, the menu for setting GUIs may display a list 200 of setting items and a preview 210. The list 200 may have a hierarchy structure so that, if an item is chosen, the list 200 further display sub items for the selected item. If a user applies a sub item, the preview 210 displays the GUIs where the sub item is applied. If a user selects an item, then the menu may be changed to next menu.

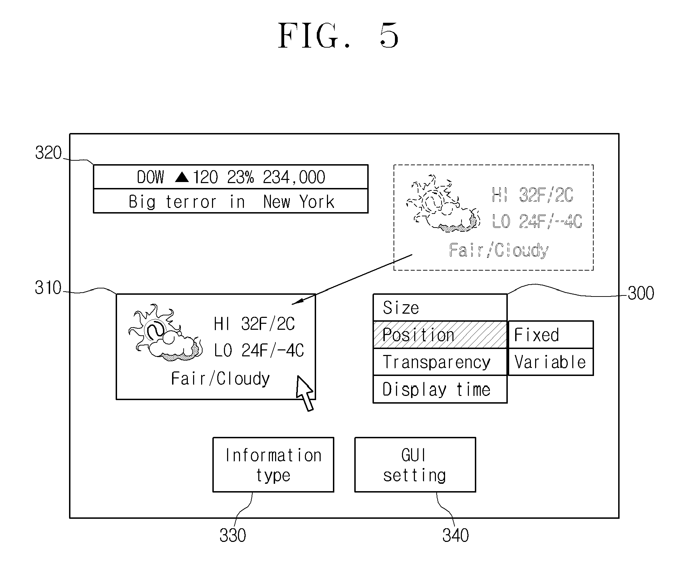

FIG. 5 illustrates a menu for setting an environment according to an exemplary embodiment of the present invention, especially a menu for setting display conditions.

Referring to FIG. 5, the menu for setting display conditions displays a list 300 of condition setting items. The list 300 may have a hierarchy structure so that, if an item is chosen, the list 300 further display sub items for the selected item. For example, if a user selects 'position' item, then a new list of sub items appears. If a user select 'fixed' item, then a user may select a fixed position for an information window 310 to be displayed by moving the information window 310 to the position a user wants using an arrow. For helping a user to choose the fixed position, other information window 320 which is already set may be displayed together. A user may avoid choosing overlapped position of the information window 310 with a position of the other information window 320. For distinguishing the information window 310 which is set now from the other information window 320 which is already set, the information window 310 may be displayed with highlight. The menu for setting display conditions may provide an information type item 330 or a GUI setting item 340 for going to the menu for setting information type or the menu for setting GUIs directly.

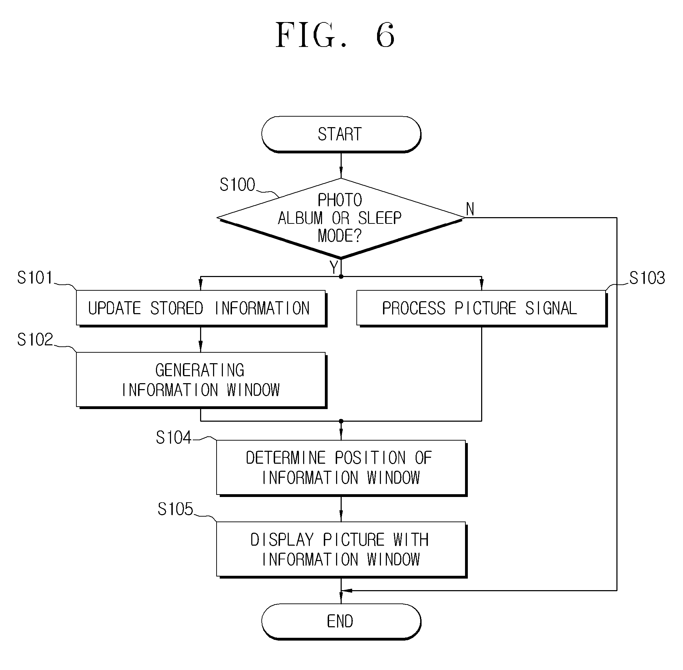

FIG. 6 is a flow chart of operations of a display apparatus according to an exemplary embodiment of the present invention.

The display apparatus checks whether to enter into the photo album mode or the sleep mode (S100). If the display apparatus enters into the photo mode or the sleep mode (S100-Y), the display apparatus updates the stored information to the latest information (S101). The display apparatus generates an information window using the latest information (S102). The display apparatus processes a picture signal or an image signal to recover a picture or image to be displayed (S103). The display apparatus determines a position to display the information window based on the recovered picture if a user in advance selects a variable position mode in which the position of the information window is changed (S104). The display apparatus displays the picture and the information window together (S105).

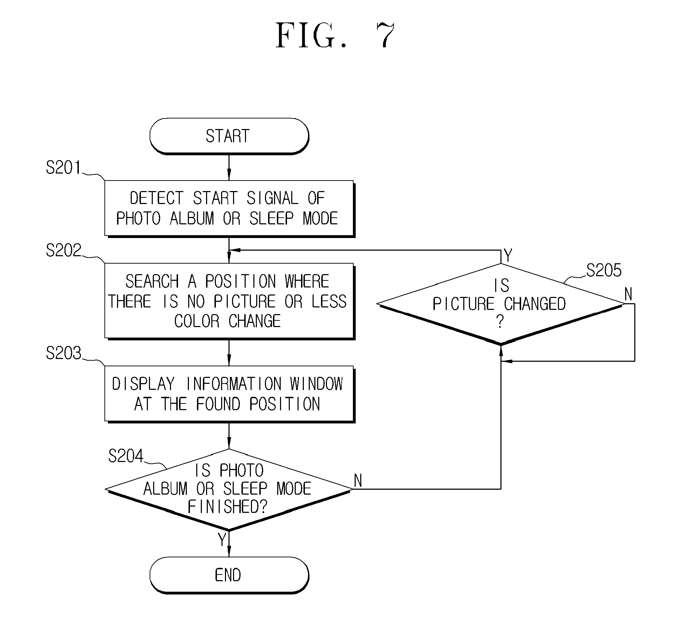

FIG. 7 is a flow chart of operations of a display apparatus according to an exemplary embodiment of the present invention, especially operations of a display apparatus when the picture to be displayed changes over time.

Referring to FIG. 7, if the display apparatus detects a start signal for the photo album mode or the sleep mode (S201), the display apparatus searches for a position where there is no picture or less color change in the picture than at other areas of the picture (S202). The display apparatus displays an information window at the found position (5203). The display apparatus checks whether the photo album mode or the sleep mode is finished (S204). If the photo album mode or the sleep mode is still going on (S204-N), the display apparatus checks whether the picture or a position where the processed image is displayed is changed (S205). If the picture or a position where the processed image is displayed is changed (S205-Y), the display apparatus repeats operations S202 to S204.

FIG. 7 shows the case that the position of the information window changes related to whether the picture is changed. But other case that the position of the information window changes after a predetermined time passes is also possible.

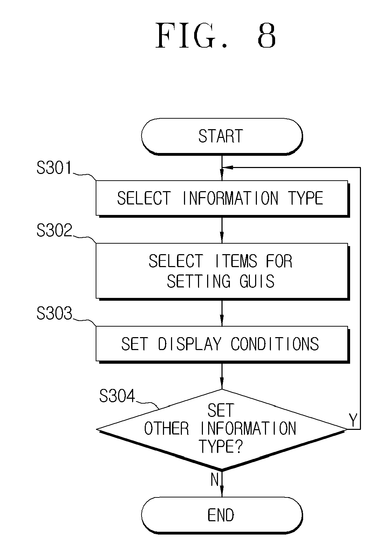

FIG. 8 is a flow chart of operations of setting an information window according to an exemplary embodiment of the present invention.

A user may select information type the user wants to set (S301). A user may set GUIs for the selected information type (S302). For example, a user may set font, size, and color of text, icons to be displayed with the text, background design. A user may set display conditions such as size, display position, transparency, and display time of the information window (S303). For a user who wants to set another information window, the display apparatus may provide a way to do operations S301 to S303 repeatedly for another information type (S304).

Although exemplary embodiments of the present invention have been described for illustrative purposes, those skilled in the art will appreciate that various modifications, additions and substitutions are possible, without departing from the scope of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for displaying an information window, comprising:
processing an image signal to be ready to be displayed;
generating an information window (101,102) to show time-varying information received from an external source; and
displaying the processed image signal with the generated information window (101,102) on a screen.

2. The method of claim 1, further comprising detecting a position where the processed image signal is not displayed in the screen or there is less color change in the processed image signal than at other positions of the processed image signal and the displaying displays the generated information window (101,102) at the detection position.

3. The method of claim 2, further comprising repeating the processing, the generating and the displaying if the processed image signal changes or a position where the processed image signal is displayed changes.

4. The method of any preceding claim, further changing a position where the generated information window (101,102) is displayed after a predetermined time passes.

5. The method of any preceding claim, wherein the time-varying information window (101,102) has different shape depending on information type.

6. The method of any preceding claim, wherein the time-varying information uses a Really Simple Syndication, RSS, format.

7. A method of any preceding claim, wherein image signal is processed if a mode is a photo album mode or a sleep mode and wherein information window (101,102) is generated if the mode is the photo album mode or the sleep mode.

8. The method of claim 7, further comprising repeating the processing, the displaying and the detecting if the image signal changes or a position where the processed image signal is displayed is changes.

9. The method of claim 7 or claim 8, further comprising changing a position where the generated information window (101,102) is displayed after a predetermined time passes.

10. The method of any one of claims 7 to 9, wherein the information window (101,102) has different shape depending on information type.

11. The method of any preceding claim, further comprising setting an information window (101,102), comprising:
selecting a time-varying information type;
selecting a design of an information window (101,102) for the selected time-varying information type; and
selecting at least one of display options for the information window (101,102).

12. The method of claim 11, wherein the display options include size of the information window (101,102), a display position of the information window (101,102), transparency of the information window (101,102), and display time of the information window (101,102).

13. A display apparatus, comprising:
a network interface (10) which receives time-varying information from an external source:
an On Screen Display, OSD, generating unit (30) which generates an information window (101,102) to show the time-varying information;
a signal processing unit (40) which processes an image signal to be ready to be displayed;
a display unit (60) which displays the processed image signal with the generated information window (101,102) on a screen; and
a control unit (70) which controls the OSD generating unit (30), the signal processing unit (40), and the display unit (60) to display the processed image signal and the generated information window (101,102) together.

14. The display apparatus of claim 13, further comprising a user input unit (50) which is operable to select an option for displaying or generating the information window (101,102).

15. The display apparatus of claim 13 or claim 14, wherein the control unit (70) detects a position where there is no processed image signal in the screen or less color change in the processed image signal and the generated information window (101,102) is displayed.
